# EUROPÄISCHE PATENTANMELDUNG

(11) **EP 2 514 678 A1**
(43) Veröffentlichungstag der Anmeldung: **24.10.2012**
(21) Anmeldenummer: 11172200.5
(22) Anmeldetag: 30.06.2011
(51) Int. Cl.: B65B 51/30, B65B 9/02

(54) **Antriebsordnung für eine Folienverpackungsmaschine**

(30) Priorität: 18.04.2011 DE 102011018384
(71) Anmelder: Beck Packautomaten GmbH & Co. KG, 72636 Frickenhausen (DE)
(72) Erfinder: Gonser, Martin, 72636 Frickenhausen (DE)
(74) Vertreter: Witte, Weller & Partner

(57) **Zusammenfassung**

Die vorliegende Erfindung betrifft eine Verpackungsmaschine (10) zum Verpacken eines Packguts (12) mit einer Umverpackung (14, 16), mit mindestens einer Transporteinrichtung (35, 50) zum Fördern des Packguts (12) in einer Transportrichtung (T), mit einer ersten Längstrennschweißeinrichtung (24) zum Verschweißen der Umverpackung (14, 16) parallel zu der Transportrichtung (T), und mit einer Quertrennschweißeinrichtung (22) zum Verschweißen der Umverpackung (14, 16) quer zu der Transportrichtung (T), wobei die Quertrennschweißeinrichtung (22) als mitlaufende Quertrennschweißeinrichtung ausgebildet und auf einem in der Transportrichtung (T) bewegbaren Schlitten angeordnet ist. Des Weiteren sind eine Aggregatantriebseinrichtung (77, 95; 114) zum Antreiben eines auf dem Schlitten (40) angeordneten Aggregats (59, 83; 112) vorgesehen, wobei die Aggregatantriebseinrichtung (77, 95; 114) ortsfest angeordnet ist und mittels eines Endloselements (70, 86; 113) mit dem Aggregat (59, 83; 112) gekoppelt ist, sowie eine Schlittenantriebseinrichtung (46) zum Antreiben des Schlittens (40) und eine Regelungseinrichtung (80) vorgesehen, die dazu ausgebildet ist, eine Bewegung des Schlittens (40) in der Transportrichtung (T) und eine Bewegung des Endloselements (70, 86; 113) zu regeln.

## Beschreibung

Die vorliegende Erfindung betrifft eine Verpackungsmaschine zum Verpacken eines Packguts mit einer Umverpackung, mit mindestens einer Transporteinrichtung zum Fördern des Packguts in einer Transportrichtung, mit mindestens einer Längstrennschweißeinrichtung zum Verschweißen der Umverpackung parallel zu der Transportrichtung, und mit einer Quertrennschweißeinrichtung zum Verschweißen der Umverpackung quer zu der Transportrichtung, wobei die Quertrennschweißeinrichtung als mitlaufende Quertrennschweißeinrichtung ausgebildet und auf einem in der Transportrichtung bewegbaren Schlitten angeordnet ist.

Eine derartige Verpackungsmaschine ist beispielsweise aus der Druckschrift US 5 653 085 A bekannt.

Verpackungsmaschinen werden in vielen industriellen Anwendungen zum Verpacken von unterschiedlichen Packgütern verwendet. Bei den Packgütern kann es sich um Konsumartikel wie beispielsweise Datenträger, Bücher oder übliche, in Supermärkten vertriebene Artikel handeln, aber auch um Sonderartikel wie beispielsweise Ersatzteile oder Baustoffe wie Ton. Auch bei Zeitschriften mit Beiliegern oder im Bereich des Versandhandels finden Verpackungsmaschinen regelmäßig Anwendung.

Die vorliegende Erfindung beschäftigt sich mit Folienverpackungsmaschinen, bei denen grundsätzlich zwischen Formschultermaschinen, Serienpackmaschinen und Banderoliermaschinen unterschieden wird. Während Formschultermaschinen und Serienpackmaschinen dazu vorgesehen sind, ein Packgut vollständig in Folie einzuhüllen, wird mittels einer Banderoliermaschine lediglich eine Banderole um ein zu verpackendes Packgut gelegt.

Unter "Verpackungsmaschine" sind im Rahmen der vorliegenden Erfindung somit alle der voranstehend genannten Arten von Verpackungsmaschinen zu verstehen. In einigen der Ausgestaltungen beschäftigt sich die vorliegende Erfindung jedoch mit Serienpackmaschinen. Unter dem Begriff "Umverpackung" sind sowohl das Packgut vollständig einhüllende Folienverpackungen zu verstehen, die zum einen als Halbschläuche und zum anderen auch in Form von separaten Folien zugeführt werden können. Lediglich im Fall von Serienpackmaschinen beschäftigt sich die vorliegende Erfindung mit aus einer oberen Folienbahn und einer unteren Folienbahn gebildeten und an allen vier Seiten des Packguts verschweißten Umverpackungen.

Allen Verpackungsmaschinen ist gemein, dass die Umverpackung an zumindest einer Seite verschweißt und abgetrennt werden muss. Für Banderolen ist dies in der Regel lediglich an einer Seite der Fall, bei Formschultermaschinen an drei Seiten und bei Serienpackmaschinen an allen vier Seiten des Packguts. Eine solche Serienpackmaschine zeigt etwa Druckschrift DE 10 2006 001 594 A1.

Verpackungsmaschinen weisen daher stets eine sogenannte Quertrennschweißeinrichtung auf, die die Umverpackung quer zur Transportrichtung des Packguts in der Verpackungsmaschine verschweißt und zumindest teilweise durchtrennt. Des Weiteren weisen Verpackungsmaschinen Längsschweißeinrichtungen bzw. Längstrennschweißeinrichtungen auf, die die Umverpackung parallel zu der Transportrichtung des Packguts verschweißen und einen eventuell vorhandenen Folienüberstand abtrennen. Der Folienüberstand wird dann in der Regel mittels einer Folienrückführung aufgefangen und wiederverwertet.

In Bezug auf eine Transportrichtung des Packguts durch die Verpackungsmaschine ist dabei in der Regel bei einer Formschultermaschine die Längstrennschweißeinrichtung vor der Quertrennschweißeinrichtung bzw. stromauf der Quertrennschweißeinrichtung in Bezug auf die Transportrichtung angeordnet. Dies geschieht, um die die Umverpackung bildende Folie in der Längstrennschweißeinrichtung unbeschädigt verarbeiten zu können und diese ohne Einkerbungen an die Quertrennschweißeinrichtung heranzuführen. Wird zunächst eine Quertrennschweißung vor einer Längstrennschweißung durchgeführt, ist es theoretisch möglich, dass die durch die Quertrennschweißung bewirkte Einkerbung quer zu der Transportrichtung der Verpackungsmaschine zu einem Zerreißen einer Folienbahn führt, wenn Kräfte in Transportrichtung zu groß sind. Des Weiteren wird durch die Anordnung der Längstrennschweißeinrichtung vor der Quertrennschweißeinrichtung eine Entlastung der Schweißnähte bei hohen Produkten an der Quertrennschweißeinrichtung möglich. Letztlich führt diese Anordnung dazu, dass die Quertrennschweißeinrichtung zuletzt angeordnet ist, und in ihrem Auslauf somit ein Freiraum vorliegt, der genutzt werden kann.

Bei einer Serienpackmaschine ist in der Regel die Quertrennschweißeinrichtung vor der Längstrennschweißeinrichtung angeordnet, um in der an der Quertrennschweißeinrichtung entstehenden Stempellücke ein aus einer oberen Folienbahn und einer unteren Folienbahn gebildeten Folienvorhang bereitzustellen, in den das Packgut einfahren kann und sich bei seiner Durchfahrt durch den Folienvorhang abhängig von seiner Größe ein gewünschtes Maß an Folie von der oberen Folienbahn bzw. der unteren Folienbahn abnimmt.

Bei Folienverpackungsmaschinen kommt es häufig darauf an, wie viele einzelne Packgüter in einem bestimmten Zeitabschnitt verpackt werden können, die sogenannte Taktrate. Um diese Taktrate zu erhöhen, wurde für Formschultermaschinen im Stand der Technik verschiedentlich vorgeschlagen, die Quertrennschweißeinrichtung als sogenannte mitlaufende Quertrennschweißeinrichtung auszuführen, wie dies etwa die eingangs genannte Druckschrift US 5 653 085 A zeigt. Unter einer mitlaufenden Quertrennschweißeinrichtung ist dabei eine Quertrennschweißeinrichtung zu verstehen, die parallel zu der Transportrichtung bewegt werden kann. Auf diese Weise wird ein kontinuierlicher Betrieb der Verpackungsmaschine ermöglicht, da kein Anhalten des Folienvorschubs für den Quertrennschweißvorgang notwendig ist. Die mitlaufende Quertrennschweißeinrichtung kann sich nämlich während des Quertrennschweißvorgangs in der Transportrichtung mit dem Packgut bzw. der Umverpackung aus den Folienbahnen mitbewegen.

Ausgehend von diesem Stand der Technik ist es eine Aufgabe der vorliegenden Erfindung, eine Verpackungsmaschine bereitzustellen, die noch höhere Taktraten bei einfachem konstruktivem Aufbau und guter Regelbarkeit der Verpackungsmaschine bereitstellt.

Erfindungsgemäß wird daher vorgeschlagen, die eingangs genannte Verpackungsmaschine dahingehend weiterzubilden, dass mindestens eine Aggregatantriebseinrichtung zum Antreiben eines auf dem Schlitten angeordneten Aggregats bereitgestellt ist, wobei die Aggregatantriebseinrichtung ortsfest angeordnet ist und mittels eines Endloselements mit dem Aggregat gekoppelt ist, sowie des Weiteren eine Schlittenantriebseinrichtung zum Antreiben des Schlittens bereitgestellt ist und eine Regelungseinrichtung bereitgestellt ist, die dazu ausgebildet ist, eine Bewegung des Schlittens in der Transportrichtung und eine Bewegung des Endloselements zu regeln.

Unter einem "Aggregat" wird dabei jede bzw. jedes beliebige, von einer Antriebseinrichtung oder einem Motor antreibbare Anordnung bzw. Element verstanden. Be dem Aggregat kann es sich beispielsweise um Hebelmechaniken, Getriebe, Kolben oder Pumpen handeln. Diese können wiederum Elemente bzw. Anordnungen auf dem Schlitten bewegen bzw. antreiben. Die Energie zum Antreiben des Aggregats wird dabei von einer Aggregatantriebseinrichtung übertragen.

Unter einem "Endloselement" wird jedes geeignete endlose Kraft-übertragungselement verstanden, beispielsweise kann es sich um eine Kette der einen Riemen handeln.

Unter dem Begriff "ortsfest" wird im Rahmen der vorliegenden Anmeldung verstanden, dass die entsprechenden Elemente bzw. das Aggregat nicht parallel zu der Transportrichtung bewegt werden. Wenn die Quertrennschweißeinrichtung bzw. der Schlitten parallel zu der Transportrichtung bewegt wird, verbleiben die entsprechenden ortsfesten Elemente an ihrem Ort und bewegen sich nicht.

Im Stand der Technik ist stets vorgesehen, dass eine Antriebseinrichtung zum Antreiben der Quertrennschweißeinrichtung zusammen mit der Quertrennschweißeinrichtung bewegt wird. Die entsprechende Antriebseinrichtung ist also auf dem Schlitten angeordnet. Hierdurch steigen jedoch die mit dem Schlitten zu bewegende Masse und damit auch die Trägheit der gesamten Schlittenanordnung an. Dies hat zur Folge, dass eine Schlittenantriebseinrichtung dazu in der Lage sein muss, eine relativ hohe Leistung zu erbringen.

Mittels der vorgeschlagenen Ausgestaltung ist es nicht notwendig, die erste Antriebseinrichtung zu bewegen. Dadurch reduzieren sich wesentlich die zu bewegenden Massen und damit die Trägheit des Schlittens auf dem die sich parallel zu der Transportrichtung bewegenden Elemente angeordnet sind. Auf diese Weise können höhere Taktraten erreicht werden, da ein schnelleres Hin- und Herbewegen der Quertrennschweißeinrichtung ermöglicht ist. Die Schlittenantriebseinrichtung muss eine geringere Leistung erbringen und die Regelung des Schlittens wird dynamischer möglich.

Insbesondere kann diese Erfindung in Formschultermaschinen bzw. Verpackungsmaschinen mit lediglich einer Längstrennschweißeinrichtung als auch in Serienpackmaschinen bzw. Verpackungsmaschinen mit zwei parallelen Längstrennschweißeinrichtungen eingesetzt werden.

Die eingangs gestellte Aufgabe wird somit vollkommen gelöst.

In einer Ausgestaltung kann vorgesehen sein, dass das Endloselement ein Scheibenelement des Aggregats umschlingt, und dass die Regelungseinrichtung derart ausgebildet ist, dass sie eine Betätigung oder eine Bewegung des Aggregats über eine Relativbewegung zwischen dem Endloselement und dem Scheibenelement regelt.

Auf diese Weise wird konstruktiv besonders einfach eine mechanische Kopplung zwischen der ortsfesten Aggregatantriebseinrichtung und dem Aggregat bereitgestellt. Durch eine entsprechende Regelung der Aggregatantriebseinrichtung und der Schlittenantriebseinrichtung kann die Relativbewegung zwischen dem Endloselement und dem Scheibenelement eingestellt werden. Auf diese Weise kann eine Betätigung des Aggregats geregelt werden. Soll beispielsweise das Aggregat stillstehen, obwohl eine Bewegung des Schlittens erfolgt, muss die Aggregatantriebseinrichtung das Endloselement mit einer Geschwindigkeit und in einer Richtung bewegen, dass sich das Endloselement relativ zu dem Scheibenelement nicht bewegt. Soll das Aggregat betätigt werden, muss die Aggregatantriebeseinrichtung das Endloselement entsprechend mit einer Geschwindigkeit bzw. in einer Richtung antreiben, die von der Schlittenbewegung verschieden ist, um eine Relativbewegung zwischen dem Endloselement und dem Scheibenelement und dadurch eine Betätigung des Aggregats zu bewirken.

Unter einem "Scheibenelement" ist jedes geeignete, von einem Endloselement kraftübertragend umschlingbare Element zu verstehen, beispielsweise eine Riemenscheibe oder ein Zahnrad.

In einer Ausgestaltung ist vorgesehen, dass die Verpackungsmaschine eine erste Längstrennschweißeinrichtung zum Verschweißen einer ersten Längsseite und des Weiteren eine zweite Längstrennschweißeinrichtung zum Verschweißen einer zweiten Längsseite der Umverpackung parallel zu der Transportrichtung aufweist. Dabei können auch die erste Längstrennschweißeinrichtung und die zweite Längstrennschweißeinrichtung ortsfest angeordnet sein.

Dieses setzt eine Verpackungsmaschine nach dem Prinzip einer Serienpackmaschine um. Eine Bewegung der ersten Längstrennschweißeinrichtung und der zweiten Längstrennschweißeinrichtung ist grundsätzlich nicht notwendig, so dass die insgesamt zu bewegende Masse reduziert werden kann.

In einer weiteren Ausgestaltung der Verpackungsmaschine kann vorgesehen sein, dass die Quertrennschweißeinrichtung in der Transportrichtung vor der ersten und der zweiten Längstrennschweißeinrichtung angeordnet ist.

Auf diese Weise kann der mit einer Serienpackmaschine mögliche Vorteil realisiert werden, dass das in einen aus der oberen Folienbahn und der unteren Folienbahn gebildeten Folienvorhang einfahrende Packgut ein entsprechendes Maß von der oberen Folienbahn und der unteren Folienbahn abnehmen kann, da die aus den Folienbahnen gebildete Umverpackung nicht bereits durch die Längstrennschweißeinrichtung geklemmt und zerschnitten ist.

Somit ist es auch hier auf diese Weise möglich, das Packgut auf einer Transporteinrichtung geführt sehr nahe an die Quertrennschweiß- und die Längstrennschweißeinrichtung heranzufahren. Das Packgut behält seine Ausrichtung und gewünschte Lage bis zum Erreichen der Quertrennschweißeinrichtung bei. Das Packgut wird dann zunächst querverschweißt und erst anschließend längssverschweißt, wobei während des Längsschweißvorgangs ebenfalls eine gute seitliche Führung des Packguts sichergestellt ist. Bevor das Packgut in die Längsschweißeinrichtung einfährt, liegt das Packgut zudem nicht auf der unteren Folienbahn auf, was einen sicheren und lagerichtigen Transport des Packguts bis an die mitlaufende Querschweißeinrichtung heran ermöglicht.

Letztlich kann das Packgut bis an die Quertrennschweißeinrichtung herangeführt werden, ohne dass bereits ein Abstand zu einem nachfolgenden oder einem vorhergehenden Packgut eingeregelt sein muss. Die Regelung dieses Abstands kann bei der Überquerung der Stempellücke erfolgen, indem Geschwindigkeiten der Transporteinrichtungen vor und hinter der Stempellücke geregelt werden. Da in dem Bereich der mitlaufenden Querschweißeinrichtung ohnehin Sensoren zur Detektion eines einlaufenden Packguts angeordnet sind, können so weitere Sensoren und die Bereitstellung einer weiteren Übergabestelle zwischen zwei Transportbändern zur Einstellung des Abstands zwischen den Packgütern eingespart werden.

Insbesondere kann bei dieser Ausgestaltung des Weiteren vorgesehen sein, dass die Verpackungsmaschine derart ausgebildet ist, dass die Quertrennschweißeinrichtung parallel zu der Transportrichtung zwischen einem bezüglich der Transportrichtung stromauf gelegenen Einlaufpunkt und einem stromab gelegenen Auslaufpunkt bewegt wird, wobei die Quertrennschweißeinrichtung ihre Ausgangsstellung in dem Auslaufpunkt einnimmt. Auch kann es bei dieser Ausgestaltung insbesondere vorgesehen sein, dass Quertrennschweißeinrichtung ihre Ausgangsstellung benachbart zu der mindestens einen Längstrennschweißeinrichtung einnimmt.

In einer weiteren Ausgestaltung kann vorgesehen sein, dass das Aggregat eine Hebelmechanik der Quertrennschweißeinrichtung ist und von der mindestens einen Aggregatantriebseinrichtung angetrieben ist.

Auf diese Weise ist es möglich, die Bewegung des Oberstempels und des Unterstempel unabhängig von der Position der mitlaufenden Quertrennschweißeinrichtung zu regeln und somit beliebige Bewegungsabläufe der Quertrennschweißeinrichtung zu realisieren.

In einer weiteren Ausgestaltung der Verpackungsmaschine ist vorgesehen, dass das Endloselement eine Hebelscheibe der Quertrennschweißeinrichtung umschlingt, und dass die Regelungseinrichtung derart ausgebildet ist, dass sie die Bewegung des Oberstempels und die Bewegung des Unterstempels über eine Relativbewegung zwischen dem Endloselement und der Hebelscheibe regelt.

Durch diese Ausgestaltung wird besonders einfach und damit vorteilhaft die unabhängige Regelung der Bewegungen des Oberstempels und des Unterstempels erreicht. Bewegt sich die Quertrennschweißeinrichtung parallel zu der Transportrichtung, bewegt sich entsprechend auch die Hebelscheibe entlang des Endloselements. Dies hätte entsprechend eine Bewegung des Oberstempels und des Unterstempels zur Folge. Wird jedoch mittels der Regelungseinrichtung eine entsprechende Bewegung des Endloselements mittels der ersten Antriebseinrichtung derart erzeugt, dass zwischen dem Endloselement und der Hebelscheibe keine Relativbewegung stattfindet, stehen der Oberstempel und der Unterstempel still. Durch eine entsprechende Regelung der ersten Antriebseinrichtung abhängig von dem Betrieb der zweiten Antriebseinrichtung ist die Regelungseinrichtung in der Lage, eine gewünschte Relativbewegung zwischen dem Endloselement und der Hebelscheibe zu erzeugen und so den Oberstempel und den Unterstempel wie gewünscht in einer beliebigen Position der Quertrennschweißeinrichtung zu öffnen und zu schließen.

In einer weiteren Ausgestaltung der Verpackungsmaschine ist vorgesehen, dass die Quertrennschweißeinrichtung derart mit dem Schlitten gekoppelt ist, dass sie parallel zu der Transportrichtung festgelegt ist und senkrecht zu der Transportrichtung mittels einer Höhenantriebseinrichtung höhenverstellbar ist, wobei die Höhenantriebseinrichtung ortsfest angeordnet ist.

Auf diese Weise ist die Quertrennschweißeinrichtung höhenverstellbar und die Höhe der Folienebene kann eingestellt werden. Zusätzlich ist entsprechend die Höhe der Längstrennschweißeinrichtung zu verstellen. Allerdings muss die Höhenantriebseinrichtung nicht mit dem Schlitten bewegt werden und die zu bewegende Masse wird zusätzlich reduziert.

In einer weiteren Ausgestaltung ist vorgesehen, dass die Verpackungsmaschine eine erste Transporteinrichtung und eine zweite Transporteinrichtung aufweist, die zwischen sich eine Stempellücke für einen Unterstempel der Quertrennschweißeinrichtung bilden, wobei das Aggregat eine Hebelmechanik der ersten Transporteinrichtung zum Bewegen der ersten Transporteinrichtung relativ zu der zweiten Transporteinrichtung ist und von der mindestens einen Aggregatantriebseinrichtung angetrieben ist.

Auf diese Weise wird es möglich, die erste Transporteinrichtung relativ zu der zweiten Transporteinrichtung zu verschieben. Das Verschieben erfolgt dabei parallel zu der Transportrichtung, d.h. eine zwischen der ersten Transporteinrichtung und der zweiten Transporteinrichtung befindliche Stempellücke wird durch das Verschieben der ersten Transporteinrichtung entweder geschlossen oder geöffnet. Durch den zusätzlichen Aggregatantrieb kann so gezielt ein Öffnen bzw. Schließen der Stempellücke herbeigeführt werden. Insbesondere kann ein Öffnen bzw. Schließen der Stempellücke so durchgeführt werden, dass die Stempellücke nur genau dann geöffnet ist, wenn ein Quertrennschweißvorgang erfolgt, d.h. sich der Oberstempel und der Unterstempel der Quertrennschweißvorgang aufeinander zu bewegen. Wenn sich ein Packgut über die Stempellücke hinwegbewegen soll, kann diese dann geschlossen eingestellt sein. So wird es möglich, auch Packgüter mit sehr geringer Länge, die ansonsten Gefahr laufen würden durch die Stempellücke zu fallen oder in dieser zu verkanten, verpackt werden können. Die beschriebene Ausführungsform eignet sich somit insbesondere zum Verpacken von Packgütern mit geringer Längserstreckung in der Transportrichtung.

In einer weiteren Ausgestaltung ist vorgesehen, dass das Endloselement eine Hebelscheibe umschlingt, insbesondere an der ein Hebelsystem zum Bewegen der ersten Transporteinrichtung angelenkt oder angebracht ist, und dass die Regelungseinrichtung derart ausgebildet ist, dass sie die Bewegung der ersten Transporteinrichtung über eine Relativbewegung zwischen dem Endloselement und der Hebelscheibe regelt.

Mittels dieser konstruktiven Ausgestaltung kann wiederum besonders einfach umgesetzt werden, dass der Aggregatantrieb ortsfest angeordnet ist und er dennoch die Hebelmechanik zum Bewegen der ersten Transporteinrichtung aktuieren kann. Durch die Steuerung der Relativbewegung zwischen dem Endloselement und der Hebelscheibe mittels der Schlittenantriebseinrichtung und der entsprechenden Aggregatantriebseinrichtung kann der zusätzliche Antrieb zum Öffnen bzw. Schließen der Stempellücke ortsfest angeordnet werden und muss nicht dem Schlitten mitbewegt werden. Eine Hebelscheibe mit entsprechend angelenktem Hebelsystem, insbesondere einem im Wesentlichen L-förmigen Hebel mit einem in dem Knick des "L" vorgesehenen Gelenk, ermöglicht eine einfache Umsetzung einer Rotationsbewegung der Hebelscheibe in eine entsprechende Schub- bzw. Zugbewegung zum Bewegen der ersten Transporteinrichtung parallel zu der Transportrichtung.

In einer weiteren Ausgestaltung ist vorgesehen, dass die Hebelmechanik der Quertrennschweißeinrichtung von einer ersten Aggregatantriebeinrichtung angetrieben ist, und die Hebelmechanik der ersten Transporteinrichtung zum Bewegen der ersten Transporteinrichtung relativ zu der zweiten Transporteinrichtung von einer zweiten Aggregatantriebseinrichtung angetrieben ist.

Entsprechend dieser Ausführungsform wird somit sowohl die Quertrennschweißeinrichtung von einer ortsfesten ersten Aggregatantriebseinrichtung angetrieben als auch die Hebelmechanik der ersten Transporteinrichtung zum Bewegen der ersten Transporteinrichtung relativ zu der zweiten Transporteinrichtung von einer zweiten Aggregatantriebseinrichtung angetrieben. Somit wird deutlich, dass grundsätzlich beliebig viele Aggregate auf dem Schlitten mittels ortsfester Aggregatantriebseinrichtungen angetrieben werden können. Im Speziellen in der vorgeschlagenen Ausführungsform wird es möglich, die Quertrennschweißeinrichtung mittels einer ortsfesten Antriebseinrichtung zu öffnen und zu schließen und auch die Stempellücke mit einer ortsfesten Antriebseinrichtung zu öffnen und zu schließen. Mittels der Regelungseinrichtung können die Bewegungen zusammen mit der Bewegung des Schlittens koordiniert und so die gewünschten Relativbewegungen erzeugt werden.

In einer weiteren Ausgestaltung ist vorgesehen, dass die Regelungseinrichtung derart ausgebildet ist, dass sie eine Betätigung der Hebelmechanik der Quertrennschweißeinrichtung und der Hebelmechanik der ersten Transporteinrichtung über eine Relativbewegung zwischen dem jeweiligen Endloselement und der jeweiligen Hebelscheibe unabhängig voneinander regelt.

Wie bereits voranstehend angedeutet, können so unabhängige Bewegungen der Quertrennschweißeinrichtung und der ersten Transporteinrichtung relativ zu der zweiten Transporteinrichtung initiiert werden. Jedes der Aggregate, d.h. sowohl eine Hebelmechanik der Quertrennschweißeinrichtung als eine Hebelmechanik der ersten Transporteinrichtung, wird über eine eigene, von einem Endloselement umschlungene Hebelscheibe aktuiert, wobei durch Regelung der Schlittenantriebseinrichtung und der entsprechenden Aggregatantriebseinrichtung eine Relativbewegung zwischen dem Endloselement und der Hebelscheibe geregelt und entsprechend die Bewegungen der Hebelmechaniken geregelt werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Ansicht der Bauelemente einer Ausführungsform einer Verpackungsmaschine,
Fig. 2 eine schematische Oberansicht der Bauelemente in einem Bereich der Längstrennschweißeinrichtungen der Verpackungsmaschine in Fig. 1,
Fig. 3 eine detaillierte Darstellung des Bereichs III in Fig. 1, und
Fig. 4 eine verallgemeinerte Ausführungsform des Bereichs III einer Verpackungsmaschine.

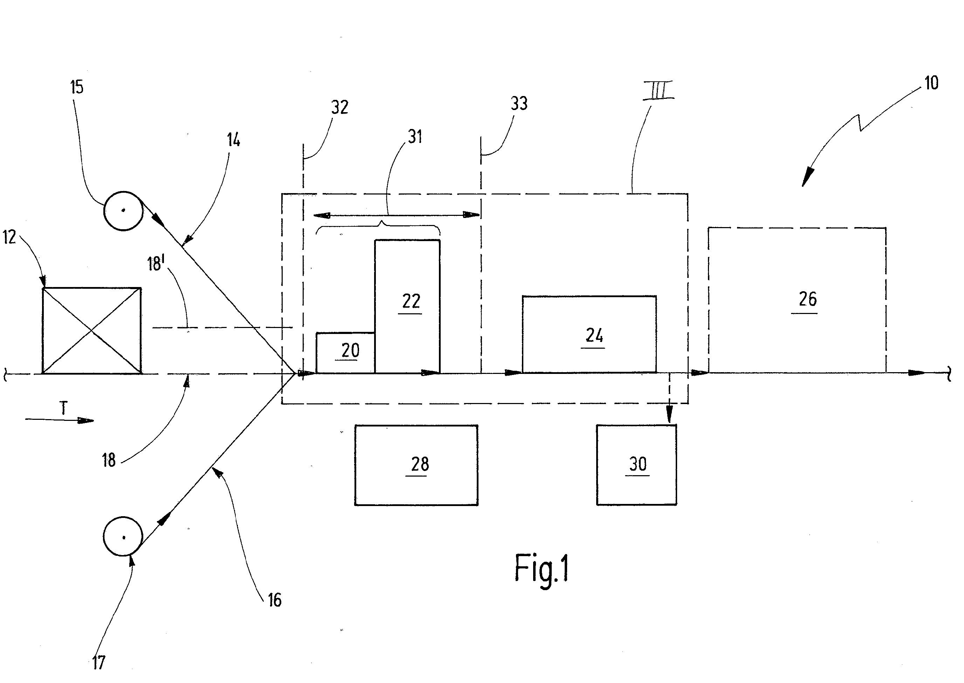

Fig. 1 zeigt eine schematische Ansicht einer Verpackungsmaschine 10. Die Verpackungsmaschine 10 ist in der dargestellten Ausführungsform als Serienpackmaschine ausgeführt.

Die Verpackungsmaschine 10 dient dazu, ein Packgut 12 mit einer Umverpackung zu versehen. Die Umverpackung besteht aus einer oberen Folienbahn 14 und einer unteren Folienbahn 16, die sich um das Packgut 12 herumlegen, wenn dieses durch einen von den Folienbahnen 14, 16 gebildeten Folienvorhang einfährt, und miteinander verschweißt werden.

Die obere Folienbahn 14 wird mittels einer oberen Folienzuführung 15 zugeführt und die untere Folienbahn 16 wird mittels einer unteren Folienzuführung 17 zugeführt.

Die obere Folienbahn 14 und die untere Folienbahn 16 laufen in einer Folienebene 18 zusammen, in der sie durch die Verpackungsmaschine 10 transportiert und verarbeitet werden. Die Folienebene 18 kann diejenige Ebene sein, in der beispielsweise eine Transporteinrichtung zum Fördern des Packguts 12 angeordnet ist, die Folienebene 18 kann jedoch auch beispielsweise auf halber Höhe des Packguts 12 vorgesehen sein, wie mit einer Folienebene 18' dargestellt ist. Insbesondere kann die Folienebene 18 in ihrer Höhe verstellbar sein.

Das Packgut 12 wird durch die Verpackungsmaschine 10 in einer Transportrichtung T gefördert. Dabei läuft das Packgut 12 zunächst in die obere Folienbahn 14 und die untere Folienbahn 16 ein und wird durch mindestens ein Rollenpaar 20 geführt. Das Rollenpaar 20 dient dazu, die obere Folienbahn 14 und die untere Folienbahn 16 parallel zu der Transportrichtung T in der Folienebene 18 bzw. 18' zu führen. Des Weiteren fährt das Packgut 12 mit den so vorgespannten Folien 14, 16 in eine Quertrennschweißeinrichtung 22 ein. Die Quertrennschweißeinrichtung 22 dient dazu, die Folien 14, 16 in einer Richtung quer zu der Transportrichtung T zumindest teilweise zu durchtrennen und miteinander zu verschweißen. Üblicherweise ist dazu in der Quertrennschweißeinrichtung 22 ein beheiztes Messer oder ein beheizter Draht vorgesehen, der die Folien 14, 16 durchtrennt und miteinander verschweißt. Die Anordnung des mindestens einen Rollenpaars 20 relativ zu der Quertrennschweißeinrichtung ist lediglich beispielhaft zu verstehen. Das Rollenpaar 20 und die Quertrennschweißeinrichtung 22 können sich in Transportrichtung T auch etwa auf gleicher Höhe bzw. leicht davor befinden.

Bei der Verarbeitung wird durch die Quertrennschweißeinrichtung 22 eine in Transportrichtung T weisende Seite des Packguts 12 und eine entgegengesetzt zu der Transportrichtung T weisende Seite des Packguts 12 verschweißt. Des Weiteren durchfährt das Packgut 12 eine Längstrennschweißeinrichtung 24, die bei einer Serienpackmaschine zu beiden Seiten des Packguts 12 angeordnet ist. Die Folienbahnen 14, 16 werden in der Längstrennschweißeinrichtung 24 zu beiden Längsseiten des Packguts 12 miteinander verschweißt und ein eventuell vorhandener Folienüberstand wird abgetrennt. Das Packgut 12 ist dann vollständig von den Folienbahnen 14, 16 umgeben und an allen vier Seiten verschweißt. Es kann vorgesehen sein, dass das Packgut 12 dann in einen Schrumpftunnel 26 einläuft, in dem die Folienbahnen 14, 16, die die Umverpackung bilden, auf das Packgut 12 mittels einer geeigneten Wärmebehandlung aufgeschrumpft werden.

Die Verpackungsmaschine 10 weist Verstelleinrichtungen 28 auf, die dazu dienen, die Verpackungsmaschine 10 auf eine Höhe und eine Breite des Packguts 12 einzustellen. Des Weiteren ist eine Folienrückführung 30 vorgesehen, die dazu dient, den in der Längstrennschweißeinrichtung 24 abgetrennten Folienüberstand aufzunehmen, damit dieser wiederverwertet werden kann.

Die Quertrennschweißeinrichtung 22 ist als mitlaufende Quertrennschweißeinrichtung ausgebildet und parallel zu der Transportrichtung T bewegbar. Dies ist durch eine Pfeil 31 angedeutet. Auch das Rollenpaar 20 ist zusammen mit der Quertrennschweißeinrichtung 22 bewegbar. Ein bezüglich der Transportrichtung T stromauf gelegene Extremposition der Quertrennschweißeinrichtung 22 wird als Einlaufpunkt 32 bezeichnet und ist mit einer gestrichelten Linie angedeutet. Eine stromabwärts gelegene Extremposition der Quertrennschweißeinrichtung 22 wird als Auslaufpunkt 33 bezeichnet und ist ebenfalls mit einer gestrichelten Linie angedeutet. Die mitlaufende Quertrennschweißeinrichtung 22 kann sich somit zwischen dem Einlaufpunkt 32 und dem Auslaufpunkt 33 hin- und herbewegen.

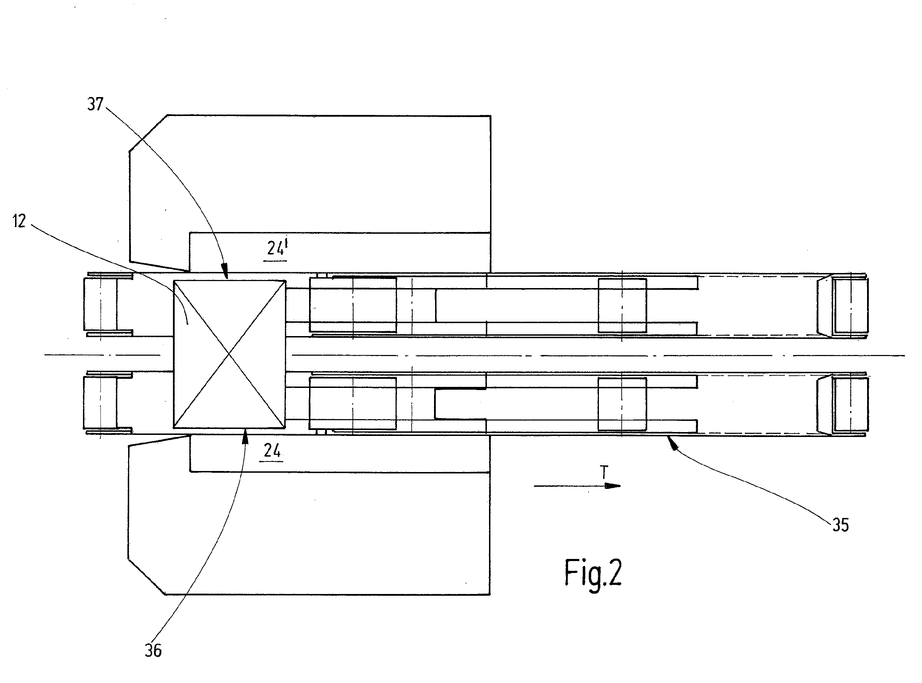

Fig. 2 zeigt eine schematische Oberansicht des Bereichs der Längstrennschweißeinrichtung 24. Wie zu erkennen ist, ist eine Transporteinrichtung 35 vorgesehen, die das Packgut 12 in der Transportrichtung T fördert. Die Ausgestaltung einer ersten Transporteinrichtung 35 in der Fig. 2 ist lediglich beispielhaft zu verstehen. Insgesamt weist die Verpackungsmaschine 10 zwei Längstrennschweißeinrichtungen 24, 24' auf. Dies sind eine erste Längstrennschweißeinrichtung 24, die das Packgut 12 bzw. die das Packgut 12 umgebende Umverpackung 14, 16 entlang einer ersten Längsseite 36 verschweißt. Des Weiteren ist eine zweite Längstrennschweißeinrichtung 24' vorgesehen, die entsprechend die Umverpackung 14, 16 an einer zweiten Längsseite 37 verschweißt. Das Packgut 12 wird somit an allen vier Seiten von einer Schweißnaht umgeben, wenn es die Verpackungsmaschine 10 durchlaufen hat.

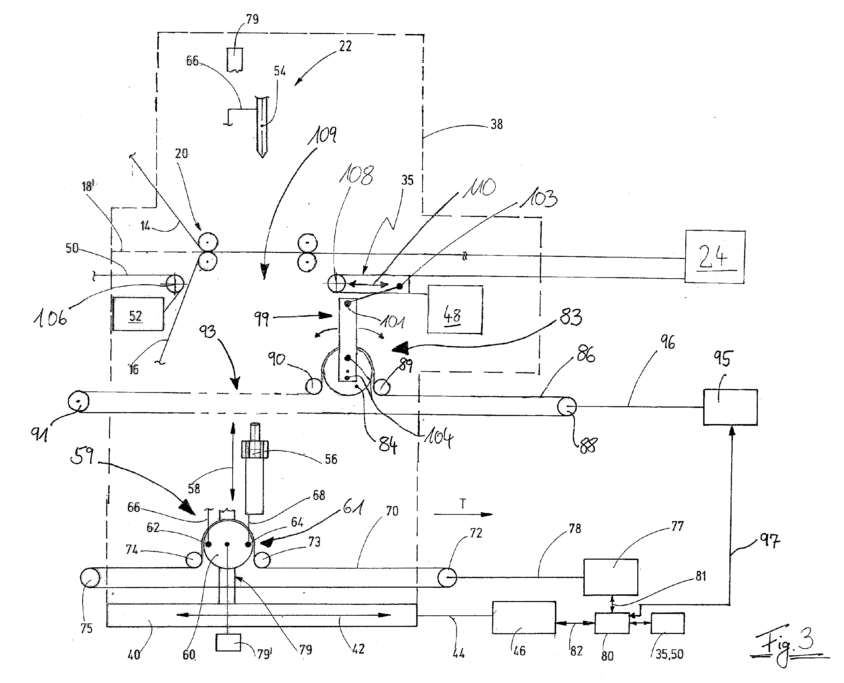

Fig. 3 zeigt eine detaillierte Darstellung eines Bereichs III in der Fig. 1. Dargestellt sind die Quertrennschweißeinrichtungen 22 und die in einer Seitenansicht lediglich sichtbare erste Längstrennschweißeinrichtung 24.

Mit einem Rahmen 38 sind diejenigen Elemente der Verpackungsmaschine 10 umgeben, die zusammen mit der Quertrennschweißeinrichtung 22 parallel zu der Transportrichtung T bewegt werden. Diese Elemente werden gemeinsam mittels eines Schlittens 40 parallel zu der Transportrichtung T bewegt, an dem sie jeweils zumindest parallel zu der Transportrichtung T festgelegt sind, was im Einzelnen aus Gründen der Übersichtlichkeit nicht dargestellt ist.

Die Bewegungsrichtung des Schlittens parallel zu der Transportrichtung T ist mit einem Pfeil 42 angedeutet. Der Schlitten 40 ist mittels eines geeigneten Kopplungselements 44, beispielsweise einem Endloselement wie einem Riemen oder einer Kette, mit einer Schlittenantriebseinrichtung 46 verbunden, so dass die Schlittenantriebseinrichtung 46 den Schlitten 40 in Richtung des Pfeils 42 bewegen kann. Bei der Schlittenantriebseinrichtung 46 kann es sich beispielsweise um einen Servomotor handeln.

Bei einer Bewegung des Schlittens 40 und der damit einhergehenden Bewegung der Quertrennschweißeinrichtung 22 verkürzt bzw. verlängert sich entsprechend eine Länge der ersten Transporteinrichtung 35. Die erste Transporteinrichtung 35 weist daher eine an sich bekannte Umschlingungsmimik 48 auf, wie sie beispielsweise aus der eingangs genannten Druckschrift US 5,653,085 A bekannt ist, um die entsprechende Verkürzung bzw. Verlängerung der ersten Transporteinrichtung 35 zu kompensieren. Die Umschlingungsmimik ist aus Gründen der Übersichtlichkeit nicht im Einzelnen dargestellt, wie bereits ausgeführt ist ihre Ausgestaltung dem Fachmann grundsätzlich bekannt. Die erste Transporteinrichtung 35 transportiert ein Packgut 12 in Richtung der Längstrennschweißeinrichtung 24 weiter, wenn das Packgut 12 die Quertrennschweißeinrichtung 22 durchlaufen hat.

Entsprechend ist eine zweite Transporteinrichtung 50 vorgesehen, die das Packgut 12 an die Quertrennschweißeinrichtung 22 heranführt. Auch dessen Länge ändert sich abhängig von der Position des Schlittens 40, so dass auch die zweite Transporteinrichtung 50 eine entsprechende Umschlingungsmimik 52 aufweist, um ihre Verlängerung bzw. Verkürzung zu kompensieren.

Die Quertrennschweißeinrichtung 22 weist einen Oberstempel 54 und einen Unterstempel 56 auf, die entlang einer durch einen Pfeil 58 angedeuteten Richtung aufeinander zu bewegbar sind und sich in der Folienebene 18' treffen. Aus Gründen der Übersichtlichkeit ist in der Fig. 3 die Folienebene 18' ausgeführt, da sich diese von der Ebene der Transporteinrichtungen 35, 50 unterscheidet.

Zur Bewegung des Oberstempels 54 und des Unterstempels 56 ist ein erstes Aggregat 59 vorgesehen. Das Aggregat 59 weist eine Hebelmechanik 61 auf. In der Hebelmechanik 61 werden der Oberstempel 54 und der Unterstempel 56 mittels einer Hebelscheibe 60 angetrieben. Die Hebelscheibe 60 weist einen ersten Anlenkpunkt 62 und einen zweiten Anlenkpunkt 64 auf. Mit dem ersten Anlenkpunkt 62 ist ein Hebelelement 66 gekoppelt, das den Oberstempel 54 bewegt. Mit dem zweiten Anlenkpunkt 64 ist ein zweites Hebelelement 68 gekoppelt, das den Unterstempel 56 bewegt. Auf diese Weise ist es möglich, durch eine Drehung der Hebelscheibe 60 den Unterstempel 56 in der in der Fig. 3 dargestellten Perspektive nach oben und den Oberstempel 54 nach unten zu bewegen, so dass sie sich in der Folienebene 18' treffen.

Die Hebelscheibe 60 ist von einem Endloselement 70 umschlungen. Das Endloselement 70 ist beispielsweise als Kette oder als Riemen ausgebildet, wobei die Hebelscheibe 60 eine entsprechend komplementäre Ausbildung über ihren Umfang aufweist, so dass das Endloselement 70 die Hebelscheibe 60 treiben kann. Des Weiteren sind Umlenkrollen 72, 73, 74, 75 vorgesehen, die das Endloselement 70 führen. Die spezifische Ausgestaltung des Verlaufs des Endloselements 70 und der Ausgestaltung der Hebelscheibe 60 in der Fig. 3 ist lediglich beispielhaft zu verstehen. Es sind auch andere Anordnungen denkbar, bzw. andere Umschlingungswege denkbar, in denen das Endloselement 70 die Hebelscheibe 60 treiben kann. Auch die geometrische Form der Hebelscheibe 60 kann variieren. Diese muss lediglich die zwei Anlenkpunkte 62 und 64 aufweisen, um die Hebelelemente 66 und 68 an die Hebelscheibe 60 anzulenken und darüber hinaus eine geeignete Umfangsausgestaltung aufweisen, so dass eine Kraftübertragung von dem Endloselement 70 auf die Hebelscheibe 60 möglich ist, um eine entsprechende Drehung der Hebelscheibe 60 und damit Bewegung des Oberstempels 54 und des Unterstempels 56 zu bewirken.

Zum Antrieb der Hebelscheibe 60 ist eine erste Aggregatantriebseinrichtung 77 vorgesehen. Die erste Aggregatantriebseinrichtung 77 kann über ein Kopplungselement 78 mit einer der Umlenkrollen, in der dargestellten Ausführungsform der Umlenkrolle 72, verbunden sein, es kann aber beispielsweise auch vorgesehen sein, dass die Umlenkrolle 72 direkt auf einer Ausgangswelle der ersten Aggregatantriebseinrichtung 77 angeordnet ist. Die erste Aggregatantriebseinrichtung 77 kann beispielsweise als Servomotor ausgebildet sein.

Um die Folienebene 18 bzw. 18' in ihrer Höhe verstellen zu können, ist die Quertrennschweißeinrichtung 22 höhenverstellbar ausgebildet. Dazu ist die Quertrennschweißeinrichtung 22 mittels eines Säulenelements 79 zwar höhenverstellbar, aber in der Transportrichtung T fest mit dem Schlitten 40 gekoppelt. Die Quertrennschweißeinrichtung 22, d.h. insbesondere der Oberstempel 54, der Unterstempel 56, die Hebelelemente 66, 68, die Hebelscheibe 60, sowie das Endloselement 70, die Umlenkrollen 72, 73, 74, 75 und die erste Antriebseinrichtung 77 ist somit relativ zu dem Schlitten 40 entlang des Säulenelements 79 höhenverstellbar. Die Höhenverstellung kann mittels einer geeigneten Höhenantriebseinrichtung (79'), etwa einem Spindelantrieb, bewirkt werden, der mit der Quertrennschweißeinrichtung 22 geeignet gekoppelt ist. In der Transportrichtung (T) ist das Säulenelement 79 jedoch an dem Schlitten festgelegt, so dass gleichzeitig die Funktionalität als mitlaufende Querschweißeinrichtung 22 bereitgestellt ist. Die Höhenantriebseinrichtung kann jedoch ortsfest angeordnet werden und muss dann nicht zusammen mit dem Schlitten 40 bewegt werden, was die anzutreibenden Massen zusätzlich verringert.

Des Weiteren ist eine Regelungseinrichtung 80 vorgesehen, die über entsprechende Kommunikationsleitungen 81, 82 mit der ersten Aggregatantriebseinrichtung 77 und der Schlittenantriebseinrichtung 46 kommunizieren kann. Auf diese Weise ist die Regelungseinrichtung 80 dazu in der Lage, sowohl den Schlitten 40 parallel zu der Transportrichtung T zu verfahren, als auch eine Relativbewegung zwischen der Hebelscheibe 60 und dem Endloselement 70 zu regeln. Wird der Schlitten 40 parallel zu der Transportrichtung T verfahren, wird entsprechend auch die Hebelscheibe 60 parallel zu der Transportrichtung T verfahren. Wird das Endloselement 70 während dieser Bewegung stillstehen, würde sich die Hebelscheibe 60 an dem stillstehenden Endloselement 70 drehen und so würde allein aufgrund der Bewegung des Schlittens 40 eine daher ungewollte Bewegung des Oberstempels 54 und des Unterstempels 56 hervorgerufen. Daher wäre in dem Fall, dass der Schlitten 40 bewegt werden soll, ohne dass der Oberstempel 54 und der Unterstempel 56 eine Bewegung in Richtung des Pfeils 58 vollführen, das Endloselement 70 mittels der ersten Aggregatantriebseinrichtung 77 entsprechend derart anzutreiben, dass keinerlei Relativbewegung zwischen dem Endloselement 70 und der Hebelscheibe 60 erfolgt, so dass sich die Hebelscheibe 60 aufgrund der Bewegung des Schlittens 40 nicht dreht. Des Weiteren ist es so natürlich möglich, auch bei einem sich bewegenden Schlitten 40 durch eine entsprechende Geschwindigkeitsvorgabe der Regelungseinrichtung 80 an die erste Aggregatantriebseinrichtung 77 gewollt eine Relativbewegung zwischen der Hebelscheibe 60 und dem Endloselement 70 hervorzurufen, so dass sich die Hebelscheibe 60 gewollt in die gewünschte Richtung dreht, um so ein Öffnen bzw. Schließen des Oberstempels 54 und des Unterstempels 56 der Quertrennschweißeinrichtung 22 hervorzurufen.

Des Weiteren kann die Regelungseinrichtung 80 mit den Transporteinrichtungen 35, 50 kommunizieren. Die Regelungseinrichtung 80 ist dann dazu ausgebildet, eine jeweilige Geschwindigkeit der Transporteinrichtungen 35, 50 zu regeln und so einen Abstand zwischen Packgütern 12 zu beeinflussen. Auf diese Weise kann sichergestellt werden, dass die Packgüter 12 dann auf der Transporteinrichtung 35 in gleichen Abständen angeordnet sind.

Die Regelungseinrichtung 80 ist mittels der Datenleitung 81 mit der ersten Aggregatantriebseinrichtung 77 in Kommunikation. Des Weiteren ist die Regelungseinrichtung 80 mit einer weiteren Datenleitung 82 in Kommunikation mit der Schlittenantriebseinrichtung 46. Über die Datenleitungen 81, 82 erfolgt ein Datenaustausch zwischen der Schlittenantriebseinrichtung 46 bzw. der ersten Aggregatantriebseinrichtung 77 mit der Regelungseinrichtung 80, so dass die Regelungseinrichtung 80 die Schlittenantriebseinrichtung 46 und die erste Aggregatantriebseinrichtung 77 regeln kann.

Des Weiteren ist ein zweites Aggregat 83 vorgesehen. Das zweite Aggregat 83 dient dazu, die erste Transporteinrichtung 35 in der Transportrichtung T relativ zu der zweiten Transporteinrichtung 50 zu bewegen. Das Aggregat 83 weist eine Hebelscheibe 84 auf, die von einem Endloselement 86 umschlungen ist. Des Weiteren sind Umlenkrollen 88, 89, 90 und 91 vorgesehen, die den Verlauf des Endloselements 86 und die Umschlingung der Hebelscheibe 84 festlegen. Alternative Ausgestaltungen sind denkbar, wie voranstehend für die Hebelscheibe 60 und das Endloselement 70 erläutert.

Mit einem gestrichelten Abschnitt 93 des Verlaufs des Endloselements 86 ist angedeutet, dass das Endloselement 86 in der in Fig. 3 senkrecht zur Bildebene verlaufenden Dimension derart angeordnet ist, dass der Unterstempel 56 bei seiner Bewegung parallel zu der Richtung 58 nicht mit dem Endloselement 86 kollidiert.

Zum Antreiben des Endloselements 86 ist eine zweite Aggregatantriebseinrichtung 95 vorgesehen. Die Aggregatantriebseinrichtung 95 steht über ein Kupplungselement 96 in Verbindung mit der Umlenkrolle 88, so dass die zweite Aggregatantriebseinrichtung 95 die Umlenkrolle 88 und damit das Endloselement 86 antreiben kann. Die Ausgestaltung des Kopplungselements 96 kann ähnlich zu der Ausgestaltung des Kopplungselements 78 folgen. Des Weiteren ist eine Datenleitung 97 vorgesehen, über die die Regelungseinrichtung 80 mit der zweiten Aggregatantriebseinrichtung 95 in Kommunikation steht, so dass die Regelungseinrichtung 80 die zweite Aggregatantriebseinrichtung 95 regeln kann. Die Ausgestaltung der Datenleitungen 81, 82 und 97 kann sowohl kabellos als auch kabelgebunden auf eine geeignete Weise erfolgen.

In dem Aggregat 83 ist eine Hebelmechanik 99 vorgesehen, mit der eine Rotationsbewegung der Hebelscheibe 84 in eine Bewegung der ersten Transporteinrichtung 35 parallel zu der Transportrichtung T umgesetzt wird. Hierzu weist die Hebelmechanik 99 einen im Wesentlichen L-förmigen Hebel 101 auf. Der L-förmige Hebel 101 ist an einem Anlenkpunkt 103 an der Transporteinrichtung 35 angelenkt und ist des Weiteren in Anlenkpunkten oder Anbringungspunkten 104 an der Hebelscheibe 84 angelenkt. Die Anlenkpunkte 104 an der Hebelscheibe 84 sind exzentrisch gewählt. Des Weiteren weist der L-förmige Hebel 101 in einem Knick des "L" ein weiteres Gelenk auf. Somit weist die Hebelmechanik 99 in der dargestellten Ausführungsform die Hebelscheibe 84 und den im Wesentlichen L-förmigen Hebel 101 auf, der ein an der Hebelscheibe angebrachtes Ausliegerelement aufweist, das über das Gelenk in dem Knick des "L" mit einem den anderen Schenkel des "L" bildenden Hebelelement verbunden ist, das wiederum an der ersten Transporteinrichtung 35 angelenkt ist. Auf diese Weise kann eine Rotationsbewegung der Hebelscheibe 84 in eine Bewegung der ersten Transporteinrichtung 35 parallel zu der Transportrichtung T umgesetzt werden. Selbstverständlich sind darüber hinaus auch andere geeignete Ausgestaltungen der Hebelmechanik 99 denkbar.

Die zweite Transporteinrichtung 50 weist eine Umlenkrolle 106 auf, die die Transporteinrichtung 50 in Richtung der Quertrennschweißeinrichtung 22 abschließt. Entsprechend weist auch die erste Transporteinrichtung 35 eine Umlenkrolle 108 auf, die die erste Transporteinrichtung 35 in Richtung der Quertrennschweißeinrichtung 22 abschließt. Die entsprechenden Umlenkrollen 106, 108 werden auch als "Lippen" bezeichnet. Zwischen diesen Umlenkrollen 106, 108 ist eine Stempellücke 109 ausgebildet. Die Stempellücke 109 ist somit ein Zwischenraum zwischen der ersten Transporteinrichtung 35 und 50, in der sich der Oberstempel 54 und der Unterstempel 56 der Quertrennschweißeinrichtung 22 zum Verschweißen der Folienbahnen 14, 16 quer zu der Transportrichtung T treffen. Diese Stempellücke 109 kann nun gezielt geöffnet bzw. geschlossen werden. Dazu regelt die Regelungseinrichtung 80 die Schlittenantriebseinrichtung 46 und die zweite Aggregatantriebseinrichtung 95 derart, dass eine Relativbewegung zwischen dem Endloselement 86 und der Hebelscheibe 84 auftritt. Die Hebelscheibe 84 wird dann rotiert, so dass diese Rotation der Hebelscheibe 84 mittels der Hebelmechanik 99 in eine durch einen Pfeil 110 angedeutete Bewegung der zweiten Transporteinrichtung 35 umgesetzt wird. So wird es möglich, die Stempellücke 109 gezielt zu schließen, indem die Umlenkrolle 108 auf die Umlenkrolle 106 zubewegt wird.

Mittels der dargestellten Ausführungsform ist es somit möglich, verschiedene Aggregate auf dem Schlitten 40 mittels ortsfester Aggregatantriebseinrichtungen 77, 95 anzutreiben. Dies sind zum einen die Bewegung des Oberstempels 54 und des Unterstempels 56 parallel zu der mittels des Pfeils 58 angedeuteten Richtung. Hierzu dient die Hebelmechanik 61, die das erste Aggregat 59 ausbildet. Des Weiteren ist das zweite Aggregat 83 vorgesehen, das die Hebelmechanik 99 aufweist, mittels der die Stempellücke 109 gezielt geöffnet bzw. geschlossen werden kann. Beide Bewegungen werden mittels ortsfester Aggregatantriebseinrichtungen 77, 95 erzielt, d.h. die Aggregatantriebseinrichtungen 77, 95 sind nicht auf dem Schlitten 40 angeordnet und werden nicht parallel zu der durch den Pfeil 42 angedeuteten Transportrichtung T bewegt. Eine entsprechende Regelung sowohl der Schlittenantriebseinrichtung 46 als auch der ersten Aggregatantriebseinrichtung 77 und der zweiten Aggregatantriebseinrichtung 95, um die Bewegungen der Aggregate 59, 83 gezielt zu aktuieren, erfolgt durch die Regelungseinrichtung 80.

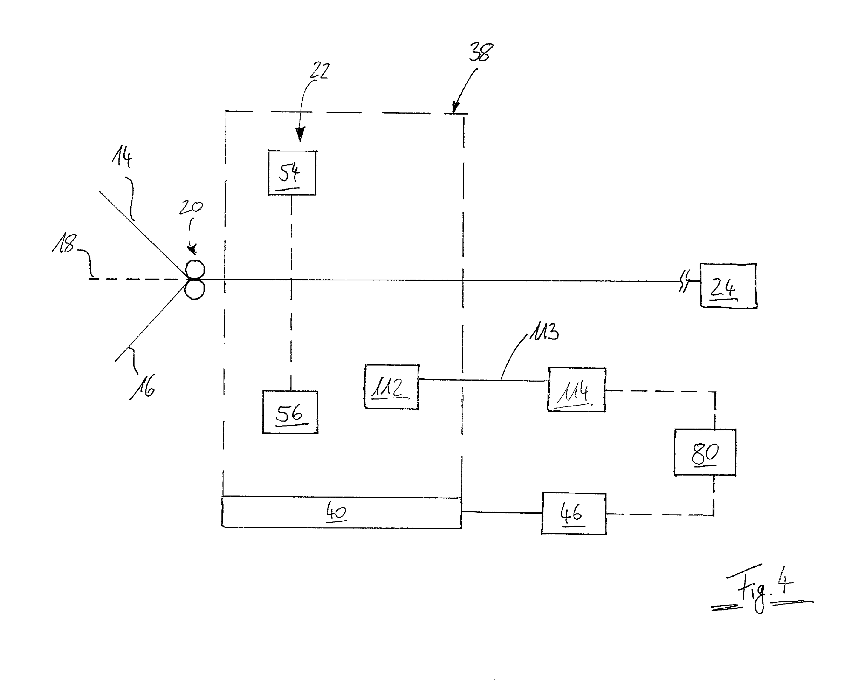

In der Fig. 4 ist noch einmal schematisch eine verallgemeinerte Ausführungsform dargestellt. Der dargestellte Ausschnitt entspricht demjenigen der detaillierten Darstellung in der Fig. 3.

Dargestellt ist die Folienebene 18 mit der oberen Folienbahn 14 und der unteren Folienbahn 16, die von dem Rollenpaar 20 geführt werden und einen Folienvorhang ausbilden und in die Quertrennschweißeinrichtung 22 einlaufen. Die Quertrennschweißeinrichtung 22 ist als mitlaufende Quertrennschweißeinrichtung auf dem Schlitten 40 angeordnet. Der Schlitten 40 wird von der Schlittenantriebseinrichtung 46 angetrieben. Mit dem Rahmen 38 sind diejenigen Elemente umschlossen, die sich mit dem Schlitten 40 mitbewegen. Dies sind mindestens die Quertrennschweißeinrichtung 22 und in der verallgemeinerten Form ein Aggregat 112. Das Aggregat 112 kann beliebig ausgestaltet sein und eine beliebige Bewegung bzw. Arbeit auf dem Schlitten 40 verrichten. Zum Antrieb dieses Aggregats 112 ist eine Aggregatantriebseinrichtung 114 bereitgestellt. Die Aggregatantriebseinrichtung 114 ist jedoch nicht mit dem Schlitten 40 mitbewegt, sondern ist ortsfest angeordnet. Die Aggregatantriebseinrichtung 114 ist mittels eines Endloselements 113 mit dem Aggregat 112 gekoppelt. Um eine Betätigung des Aggregats 112 unabhängig von der Bewegung des Schlittens 40 zu aktuieren, ist die Regelungseinrichtung 80 vorgesehen, die sowohl die Schlittenantriebseinrichtung 46 als die Aggregatantriebseinrichtung 114 entsprechend regelt.

## Patentansprüche

1. Verpackungsmaschine (10) zum Verpacken eines Packguts (12) mit einer Umverpackung (14, 16), mit mindestens einer Transporteinrichtung (35, 50) zum Fördern des Packguts (12) in einer Transportrichtung (T), mit mindestens einer Längstrennschweißeinrichtung (24, 24') zum Verschweißen der Umverpackung (14, 16) parallel zu der Transportrichtung (T), und mit einer Quertrennschweißeinrichtung (22) zum Verschweißen der Umverpackung (14, 16) quer zu der Transportrichtung (T), wobei die Quertrennschweißeinrichtung (22) als mitlaufende Quertrennschweißeinrichtung ausgebildet und auf einem in der Transportrichtung (T) bewegbaren Schlitten angeordnet ist, **gekennzeichnet durch** mindestens eine Aggregatantriebseinrichtung (77, 95; 114) zum Antreiben eines auf dem Schlitten (40) angeordneten Aggregats (59, 83; 112), wobei die Aggregatantriebseinrichtung (77, 95; 114) ortsfest angeordnet ist und mittels eines Endloselements (70, 86; 113) mit dem Aggregat (59, 83; 112) gekoppelt ist, eine Schlittenantriebseinrichtung (46) zum Antreiben des Schlittens (40), und eine Regelungseinrichtung (80), die dazu ausgebildet ist, eine Bewegung des Schlittens (40) in der Transportrichtung (T) und eine Bewegung des Endloselements (70, 86; 113) zu regeln.

2. Verpackungsmaschine nach Anspruch 1, **dadurch gekennzeichnet, dass** das Endloselement (70, 86; 113) ein Scheibenelement (60, 84) des Aggregats (59, 83; 112) umschlingt, und dass die Regelungseinrichtung (80) derart ausgebildet ist, dass sie eine Betätigung des Aggregats (59, 83; 112) über eine Relativbewegung zwischen dem Endloselement (70, 86; 113) und dem Scheibenelement (60, 84) regelt.

3. Verpackungsmaschine nach Anspruch 1 oder 2, **dadurch gekennzeichnet, dass** die Verpackungsmaschine (10) eine erste Längstrennschweißeinrichtung (24) zum Verschweißen einer ersten Längsseite (36) und des Weiteren eine zweite Längstrennschweißeinrichtung (24') zum Verschweißen einer zweiten Längsseite (37) der Umverpackung (14, 16) parallel zu der Transportrichtung (T) aufweist.

4. Verpackungsmaschine nach Anspruch 3, **dadurch gekennzeichnet, dass** die erste Längstrennschweißeinrichtung (24) und die zweite Längstrennschweißeinrichtung (24') ortsfest angeordnet sind.

5. Verpackungsmaschine nach Anspruch 3 oder 4, **dadurch gekennzeichnet, dass** die Quertrennschweißeinrichtung (22) in der Transportrichtung (T) vor der ersten (24) und der zweiten (24') Längstrennschweißeinrichtung angeordnet ist.

6. Verpackungsmaschine nach einem der Ansprüche 1 bis 5, **dadurch gekennzeichnet, dass** das Aggregat (59, 83; 112) eine Hebelmechanik (61) der Quertrennschweißeinrichtung (22) ist und von der mindestens einen Aggregatantriebseinrichtung (77) angetrieben ist.

7. Verpackungsmaschine nach Anspruch 6, **dadurch gekennzeichnet, dass** das Endloselement (70) eine Hebelscheibe (60) der Quertrennschweißeinrichtung (22) umschlingt, und dass die Regelungseinrichtung (80) derart ausgebildet ist, dass sie die Bewegung des Oberstempels (54) und die Bewegung des Unterstempels (56) über eine Relativbewegung zwischen dem Endloselement (70) und der Hebelscheibe (60) regelt.

8. Verpackungsmaschine nach Anspruch 6 oder 7, **dadurch gekennzeichnet, dass** die Quertrennschweißeinrichtung (22) derart mit dem Schlitten (40) gekoppelt ist, dass sie parallel zu der Transportrichtung (T) festgelegt ist und senkrecht zu der Transportrichtung (T) mittels einer Höhenantriebseinrichtung (79') höhenverstellbar ist, wobei die Höhenantriebseinrichtung (79') ortsfest angeordnet ist.

9. Verpackungsmaschine nach einem der Ansprüche 1 bis 5, **dadurch gekennzeichnet, dass** die Verpackungsmaschine (10) eine erste Transporteinrichtung (35) und eine zweite Transporteinrichtung (50) aufweist, die zwischen sich eine Stempellücke (109) für einen Unterstempel (56) der Quertrennschweißeinrichtung (22) bilden, wobei das Aggregat (59, 83; 112) eine Hebelmechanik (99) der ersten Transporteinrichtung (35) zum Bewegen der ersten Transporteinrichtung (35) relativ zu der zweiten Transporteinrichtung (50) ist und von der mindestens einen Aggregatantriebseinrichtung (95) angetrieben ist.

10. Verpackungsmaschine nach Anspruch 9, **dadurch gekennzeichnet, dass** das Endloselement (86) eine Hebelscheibe (84) umschlingt, und dass die Regelungseinrichtung (80) derart ausgebildet ist, dass sie die Bewegung der ersten Transporteinrichtung (35) über eine Relativbewegung zwischen dem Endloselement (86) und der Hebelscheibe (84) regelt.

11. Verpackungsmaschine nach den Ansprüchen 6 und 9, **dadurch gekennzeichnet, dass** die Hebelmechanik (61) der Quertrennschweißeinrichtung (22) von einer ersten Aggregatantriebeinrichtung (77) angetrieben ist, und die Hebelmechanik (99) der ersten Transporteinrichtung (35) zum Bewegen der ersten Transporteinrichtung (35) relativ zu der zweiten Transporteinrichtung (50) von einer zweiten Aggregatantriebseinrichtung (95) angetrieben ist.

12. Verpackungsmaschine nach den Ansprüchen 7, 10 und 11, **dadurch gekennzeichnet, dass** die Regelungseinrichtung (80) derart ausgebildet ist, dass sie eine Betätigung der Hebelmechanik (61) der Quertrennschweißeinrichtung (22) und der Hebelmechanik (99) der ersten Transporteinrichtung (35) über eine Relativbewegung zwischen dem jeweiligen Endloselement (70, 86) und der jeweiligen Hebelscheibe (60, 84) unabhängig voneinander regelt.
